# EUROPEAN PATENT APPLICATION

(11) **EP 4 729 746 A1**
(43) Date of publication of application: **22.04.2026**
(21) Application number: 25203859.1
(22) Date of filing: 23.09.2025
(51) Int. Cl.: F01D 15/10, F01D 21/00, G01D 5/26, G01K 11/3206, G01K 13/08, G01L 1/24, G02B 6/36

(54) **FIBRE OPTICAL SYSTEM FOR MONITORING AN ELECTRICAL MACHINE**

(30) Priority: 17.10.2024 GB 202415271
(71) Applicant: Rolls-Royce plc, London N1 9FX (GB)
(72) Inventor: Hallett, Jerome S C, Derby, DE24 8BJ (GB); Schiffers, Werner P, Derby, DE24 8BJ (GB)
(74) Representative: Rolls-Royce plc

(57) **Abstract**

An electrical machine having a monitoring apparatus, the monitoring apparatus comprising at least one first fibre optic cable (207) having a periodic structure within at least a section of the first fibre optic cable, the first fibre optic cable being coupled to an outcoupling optical set up (208) comprising at least one first lens (208), and an interrogator (210) connected to a second fibre optic cable and at least one second lens (209), the light transmitted through the first fibre optic cable (207) is manipulated by the first lens and transmitted to the second lens (209) which is coupled to the second fibre optical cable which transfers a light signal to the interrogator (210), and wherein a portion of the first fibre optical cable is connected to a component (202) within the electrical machine.

## Description

### Overview of the Disclosure

The disclosure relates to an optical system for monitoring the condition of an electrical machine. In particular, the disclosure relates to an optical system for monitoring the condition of a rotating component within an electrical machine.

### Background of the Disclosure

The deployment of more electrical or hybrid aircraft engines is of growing interest. These hybrid or more electric engines often feature generators coupled to the gas turbine engines. In addition to the generators there may be systems such as energy storage solutions and other electrical equipment and components that are added to the gas turbine engines. The concept of hybrid electrical or more electric propulsion, therefore, requires a rethink in terms of development testing or health management. This is because conventional methods of monitoring the health of electrical equipment may present accessibility challenges and suffer from degraded performance in the harsh environments of aircraft engines. The challenges presented by these conditions include for example, a greater susceptibility to Electromagnetic Interferences (EMI) which can deteriorate the signal's integrity, vibration and motion issues during operation, thermal issues due to variation in operating conditions. In addition to this, it is difficult to extract signals out of the rotating structure of an electrical machines unless wireless transmission is considered, however, this would require adding complex circuitry to the rotor, EMI shielding, as well as a solution for providing a power supply.

One such way of monitoring electrical equipment is through the use of fibre optics (FO). The use of Fibre Optics offers several benefits, such as being lightweight, compact, and having inherent immunity to electromagnetic interferences. In recent years the development of FO sensors has been a growing field, including for industrial and aerospace applications. FO sensing can be used to measure the temperature, strain, and acoustics at discrete points along a fibre optic cable through use of Fibre Bragg Grating (FBG) or Long Period Grating (LPG) technologies, or continuously along the length of the fibre through Distributed Fibre Optic Sensor (DFOS) technology. In all of these cases the sensing is achieved by transmitting light into the fibre and interrogating the spectrum of the reflections to detect wavelength shifts or attenuations which correspond to changing environmental conditions. However, one of the drawbacks of using FO technology is that it is difficult to implement it in rotating or moving equipment. Consequently, Fibre Optic Rotary Joint (FORJ) components have been developed which allow fibre optic signals to be transferred from rotary to stationary frames, as it appears in rotors of electric machines. However, the operation of FORJs are limited as they are complex and require precise alignment; and need to be speed rated for the shaft. They are prone to wear and the FORJ assembly can result in large heavy devices. Each of these means that there is a need for an improvement in optical sensing in aerospace applications.

### Summary of the Disclosure

The scope of the disclosure is set out in the appended claims.

According to a first aspect of the disclosure there is presented An electrical machine having a monitoring apparatus the monitoring apparatus comprising at least one first fibre optic cable having a periodic structure within, at least, a section of the first fibre optic cable, the first fibre optic cable being coupled to an outcoupling optical set up comprising at least one first lens, and an interrogator connected to a second fibre optic cable and at least one second lens, the light transmitted through the first fibre optic cable is manipulated by the first lens and transmitted to the second lens which is coupled to the second fibre optical cable which transfers a light signal to the interrogator, and wherein a portion of the first fibre optical cable is connected to a component within the electrical machine.

The electrical machine may be a motor or generator and wherein a portion of the first fibre optic cable is connected to the rotor of the generator or motor.

A portion of the first fibre optic cable may surround at least a section of the rotor and the first fibre optic cable is passed through the rotor shaft.

The at least first lens may be a collimating or non-imaging lens coupled to the end of a non-drive shaft of the electrical machine and the optical axis is centred about a rotational axis of the electrical machine, the at least one first lens being mounted to a lens mount that is connected to the shaft.

An optical axis of the at least one second lens may be positioned and centred on the rotational axis of the electrical machine.

The lens mount may also comprise balancing features for the shaft.

The at least first lens may be connected to an outcoupling collar, wherein the outcoupling collar is coupled to the outside of a component of the electrical machine, with the at least one first lens being connected to an outer periphery of the outcoupling collar, and wherein the at least first lens is not aligned with a rotational axis of the electrical machine.

The at least one first lens may have an optical axis that is perpendicular to the rotational axis of the electric machine and the at least one second lens is arranged at a distance from the at least one first lens and arranged so that its optical axis is centred perpendicular to the rotational axis of the electric motor.

More than one first optical fibre may be present and each first optical fibre having an associated first lens connected to the outcoupling collar.

The at least one first fibre optic cable and/or the second fibre optic cable may be clad with a plastic or nylon material.

The interrogator may be an emitter and receiver interrogator, which both produces and detects the light.

The first fibre optic cable may feature at least a section of a Bragg grating, Long Period Grating (LPG) technologies or Distributed Fibre Optic Sensor structure.

The at least one first and at least one second lens may form a collimating lens arrangement or a non-imaging lens arrangement.

According to a second aspect of the disclosure there is presented a gas turbine engine for an aircraft comprising: an engine core comprising a turbine, a compressor, and a core shaft connecting the turbine to the compressor; a fan located upstream of the engine core, the fan comprising a plurality of fan blades; and a gearbox that receives an input from the core shaft (26) and outputs drive to the fan so as to drive the fan at a lower rotational speed than the core shaft, wherein the gas turbine engine incorporates an electrical machine according to the first aspect.

The gas turbine engine according to the second aspect, wherein: the turbine may be a first turbine, the compressor is a first compressor, and the core shaft is a first core shaft; the engine core further comprises a second turbine, a second compressor, and a second core shaft connecting the second turbine to the second compressor; and the second turbine, second compressor, and second core shaft are arranged to rotate at a higher rotational speed than the first core shaft.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

### Brief Description of the Drawings

Embodiments will now be described by way of example only with reference to the accompanying drawings, which are purely schematic and not to scale, and in which:
Figure 1 shows a general arrangement of a turbofan engine for an aircraft;
Figure 2 presents an example of a fibre optic sensor monitoring an electrical machine;
Figure 3 presents an end cross-sectional image of the apparatus as presented in figure 2;
Figure 4 presents an example of a fibre optic senor monitoring an electrical machine;
Figure 5 presents an end cross-sectional image of the collimating collar as presented in figure 4.

### Detailed disclosure

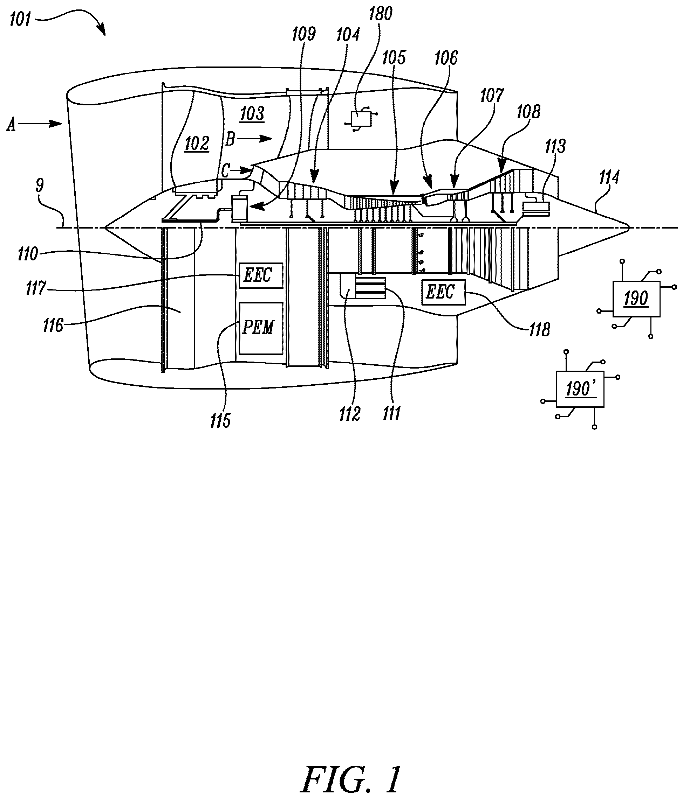

A general arrangement of an engine 101 for an aircraft is shown in Figure 1. The engine 101 is of turbofan configuration, and thus comprises a ducted fan 102 that receives intake air A and generates two pressurised airflows: a bypass flow B which passes axially through a bypass duct 103 and a core flow C which enters a core gas turbine.

The core gas turbine comprises, in axial flow series, a low-pressure compressor 104, a high-pressure compressor 105, a combustor 106, a high-pressure turbine 107, and a low-pressure turbine 108.

In operation, the core flow C is compressed by the low-pressure compressor 104 and is then directed into the high-pressure compressor 105 where further compression takes place. The compressed air exhausted from the high-pressure compressor 105 is directed into the combustor 106 where it is mixed with fuel and the mixture is combusted. The resultant hot combustion products then expand through, and thereby drive, the high-pressure turbine 107 and in turn the low-pressure turbine 108 before being exhausted to provide a small proportion of the overall thrust.

The high-pressure turbine 107 drives the high-pressure compressor 105 via an interconnecting shaft. The low-pressure turbine 108 drives the low-pressure compressor 104 via another interconnecting shaft. Together, the high-pressure compressor 105, high-pressure turbine 107, and associated interconnecting shaft form part of a high-pressure spool of the engine 101. Similarly, the low-pressure compressor 104, low-pressure turbine 108, and associated interconnecting shaft form part of a low-pressure spool of the engine 101. Such nomenclature will be familiar to those skilled in the art. Those skilled in the art will also appreciate that whilst the illustrated engine has two spools, other gas turbine engines have a different number of spools, e.g., three spools.

The fan 102 is driven by the low-pressure turbine 108 via a reduction gearbox in the form of a planetary configuration epicyclic gearbox 109. Thus, in this configuration, the low-pressure turbine 108 is connected with a sun gear of the gearbox 109. The sun gear is meshed with a plurality of planet gears located in a rotating carrier, which planet gears are in turn meshed with a static ring gear. The rotating carrier drives the fan 102 via a fan shaft 110. It will be appreciated that in alternative embodiments a star-configuration epicyclic gearbox (in which the planet carrier is static, and the ring gear rotates and provides the output) may be used instead, and indeed that the gearbox 109 may be omitted entirely so that the fan 102 is driven directly by the low-pressure turbine 108.

It is increasingly desirable to facilitate a greater degree of electrical functionality on the airframe and on the engine. To this end, the engine 101 of the present embodiment comprises one or more rotary electric machines, generally capable of operating both as a motor and as a generator. The number and arrangement of the rotary electric machines will depend to some extent on the desired functionality. Some embodiments of the engine 101 include a single rotary electric machine 111 driven by the high-pressure spool, for example by a core-mounted accessory drive 112 of conventional configuration. Such a configuration facilitates the generation of electrical power for the engine and the aircraft and the driving of the high-pressure spool to facilitate starting of the engine in place of an air turbine starter. Other embodiments, including the one shown in Figure 1, comprise both a first rotary electric machine 111 coupled with the high-pressure spool and a second rotary electric machine 113 coupled with the low-pressure spool. In addition to generating electrical power and the starting of the engine 101, having both first and second rotary machines 111, 113, connected by power electronics, can facilitate the transfer of mechanical power between the high and lower pressure spools to improve operability, fuel consumption etc.

As mentioned above, in Figure 1 the first rotary electric machine 111 is driven by the high-pressure spool by a core-mounted accessory drive 112 of conventional configuration. In alternative embodiments, the first electric machine 111 may be mounted coaxially with the turbomachinery in the engine 101. For example, the first electric machine 111 may be mounted axially in line with the duct between the low- and high-pressure compressors 104 and 105. In Figure 1, the second electric machine 113 is mounted in the tail cone 114 of the engine 101 coaxially with the turbomachinery and is coupled to the low-pressure turbine 108. In alternative embodiments, the second rotary electric machine 113 may be located axially in line with low-pressure compressor 104, which may adopt a bladed disc or bladed drum configuration to provide space for the second rotary electric machine 113. It will of course be appreciated by those skilled in the art that any other suitable location for the first and (if present) second electric machines may be adopted.

The first and second electric machines 111, 113 are connected with power electronics. Extraction of power from or application of power to the electric machines is performed by a power electronics module (PEM) 115. In the present embodiment, the PEM 115 is mounted on the fan case 116 of the engine 101, but it will be appreciated that it may be mounted elsewhere such as on the core of the gas turbine, or in the vehicle to which the engine 101 is attached, for example.

Control of the PEM 115 and of the first and second electric machines 111 and 113 is in the present example performed by an engine electronic controller (EEC) 117. In the present embodiment the EEC 117 is a full-authority digital engine controller (FADEC), the configuration of which will be known and understood by those skilled in the art. It therefore controls all aspects of the engine 101, i.e., both of the core gas turbine and the first and second electric machines 111 and 113. In this way, the EEC 117 may holistically respond to both thrust demand and electrical power demand.

The one or more rotary electric machines 111, 113 and the power electronics 115 may be configured to output to or receive electric power from one, two or more dc busses. The dc busses allow for the distribution of electrical power to other engine electrical loads and to electrical loads on the airframe. The dc busses may further receive electrical power from, or deliver electrical power to, an energy storage system such as one or more battery modules or packs.

Those skilled in the art will appreciate that the gas turbine engine 101 described above may be regarded as a 'more electric' gas turbine engine because of the increased role of the electric machines 111, 113 compared with those of conventional gas turbines.

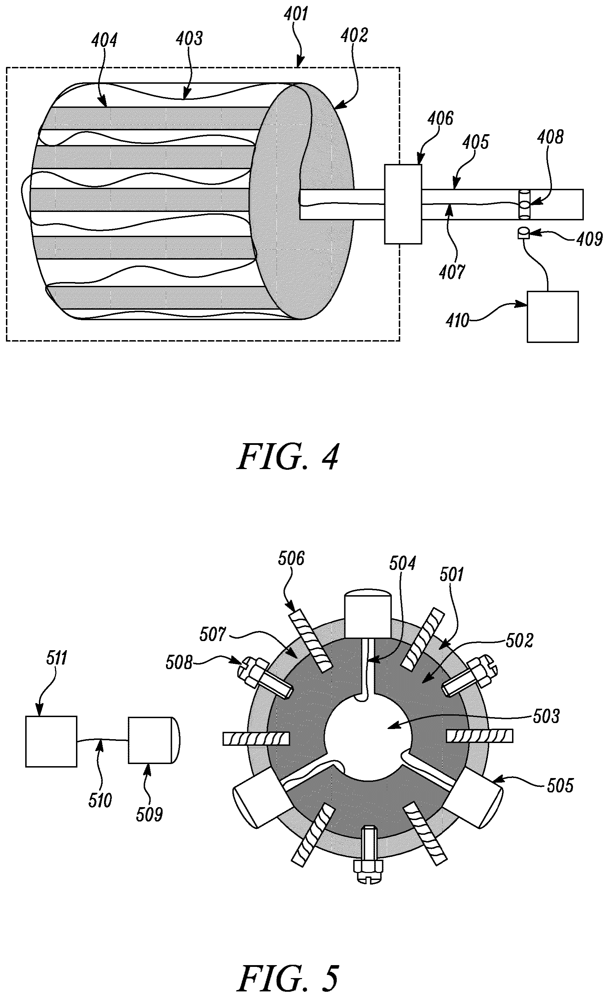

In Figure 1, the high-pressure spool is denoted by 121 whereas the low-pressure spool is denoted by 122. The high-pressure spool 121 and/or the low-pressure spool 122 may be more simply referred to as the spool 121, 122 of the gas turbine engine 101 herein. Consequently, references herein to the spool of the gas turbine engine 101 may apply to either the high-pressure spool 121 or the low-pressure spool 122. Figure 1 shows an apparatus 100 comprising a controller 190 and the gas turbine engine 101. The controller 190 is configured to carry out a method of operating the gas turbine engine 101, as discussed in further detail below with reference to Figures 4-6. The apparatus 190 may also comprise a sensing arrangement 180, as also discussed in further detail below.

The gas turbine engine 101 is provided with a thermal management system (TMS) 118. As shown in the example of Figure 1, the TMS 118 may be disposed inside the gas turbine engine 101 such that the TMS 118 is internal to the gas turbine engine 101. In other examples, the TMS 118 may be disposed at least partially outside the gas turbine engine 101 such that the TMS 118 is at least partially external to the gas turbine engine 101. The TMS 118 is generally configured to remove heat from the gas turbine engine 101 and/or redistribute heat within the gas turbine engine 101. The TMS may also be responsible for the removal of heat from the electrical systems such as ESS or generators. The TMS 118 is configured to transfer heat from a thermal source of the gas turbine engine 101 to a thermal sink. The thermal sink may be internal to or external to the gas turbine engine 101. Depending on whether the thermal sink is an internal thermal sink or an external thermal sink, the TMS 118 is configured to either remove heat from the gas turbine engine 101 or redistribute heat within the gas turbine engine 101. The TMS 118 may primarily be used for transferring heat from the thermal source to the thermal sink while the gas turbine engine 101 is in the thrust-generating state, but according to the present disclosure is also configured and operable to transfer heat from the thermal source to the thermal sink while the gas turbine engine 101 is in the idle state and/or the cranked state. The TMS 118 is suitable for managing thermal loads in a variety of operating states of the gas turbine engine 101. The TMS 118 includes a fluid pathway for circulating a coolant. The coolant may be a fluid other than air. The fluid pathway is a closed circuit, and as such is configured to prevent the coolant circulated therein in use from mixing with, or being discharged to, ambient air.

Removing heat from the gas turbine engine 101 includes transferring heat from a thermal source of the gas turbine engine 101 to an external thermal sink (e.g., an external medium). The external thermal sink may be, for example, ambient air. Similarly, redistributing heat within the gas turbine engine 101 includes transferring heat from a thermal source of the gas turbine engine 101 to an internal thermal sink of the gas turbine engine 101 (e.g., an internal medium). The internal thermal sink may be, for instance, a component of the engine outside of the core or a reservoir of, or circulating flow of, fluid associated with the TMS 118 such as oil or fuel. The thermal source of the gas turbine engine 101 may be, for example, a core of the gas turbine engine 101 or a component of the core such as a compressor disc (e.g., the low-pressure compressor 104 or the high-pressure compressor 105), a combustor (e.g., the combustor 106) or a turbine disc (e.g., the high-pressure turbine 107 or the low-pressure turbine 108). Further, the thermal source(s) of the gas turbine engine 101 may be, for instance, engine-mounted or engine proximal accessories such as control units and/or electrical/electronic components which require cooling so as to be protected from the possible thermal damage due to thermal soak-back from, for example, the core of the gas turbine engine 101 or a component of the core such as a compressor disc.

The use of more electrical equipment within such an engine requires complex health monitoring during use. In such a case, the first and, if present, second electrical machine would require monitoring during operation in flight to ensure that their performance meets its desired requirements. Condition monitoring of the electrical equipment can ensure the correct operation of the device and early fault monitoring. Such monitoring can inform of repair schedules or may inform of other issues within the engine.

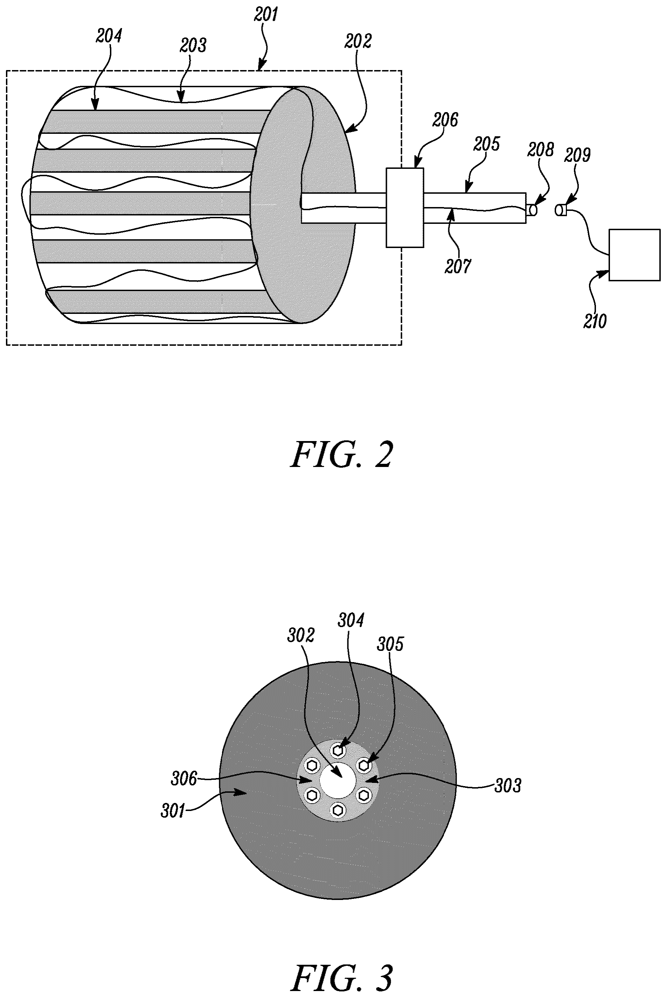

Figure 2 presents an example of a fibre optical monitoring system of an electrical machine. The electrical machine is housed within a housing 201. In this example, the machine housing holds a rotor core 202 having a fibre optical sensor 203. The optical sensor in this example is shown passing between the rotor slots 204, with the magnets above not shown. The rotor hub has a shaft 205 that passes through it. The shaft is connected to a rotor bearing structure 206. A section of the fibre optic cable 207 is embedded within the core of the shaft. At the non-drive end of the shaft there is an out-coupling for the fibre optic cable. The out-coupling optics 208 for the optical fibre is a collimating lens. The sensing equipment has a stationary optical set up 209, which may include a collimating lens for focusing the collimated light into another fibre optic cable. The fibre optic cable is fed to the interrogator 210. Collimation lenses belong to the field of imaging optics. They produce high quality transmission of the input light by minimising lens errors such as aberration, distortion. Alignment of the two lenses along the optical axis is very important. In the example presented in figure 2 the optical axis is aligned with the rotational axis of the electrical machine. In operation the inputted light becomes a parallel beam after passing through the self-focusing lens, which is then coupled into the other self-focusing lens. Through the self-focusing lens, the parallel beam is coupled into the output fibre. An alternative to the use of collimating lenses is the use of non-imaging optics. These are less sensitive to alignment and easier to control. The sensing equipment is stationary relative to the shaft. The adoption of such a design offers a simpler solution with less moving mechanical parts compared with the FORJ, making it more robust against vibrations and allowing it to support far greater rotational speeds. This opens up many applications for the integration of fibre optic sensing technologies, which would otherwise not be possible with FORJs.

Figure 3 presents an end cross-sectional image of the apparatus as presented in figure 2. In the example of figure 3 the housing around the electrical machine is not shown. The rotor hub has one or more fibre optic cables that run along the outside of the rotor hub and pass along the centre of the rotor shaft 301. The outcoupling optics are mounted at the end of the shaft which is connected to the centre of the rotor. The outcoupling optics 302 are mounted to the end of the shaft with a washer 303. The washer is shown in this case to be connected to the shaft through the use of screws 304. However, as the skilled person would appreciate there are a number of permanent (welding, brazing, soldering etc.,) or non-permanent (bolts, fasteners, structured surface features, etc.,) methods that may be used to couple the washer and the lens to the end of the shaft. The washer may be provided with a weighted washer facility 305. The washer may also be provided with features to balance the ring 306.

Figure 4 presents an example of a fibre optic monitoring system of an electrical machine. The electrical machine is housed within a housing 401. In this example the machine housing holds a rotor hub 402 having a fibre optic cable 403. The optical sensor in this example is shown passing between the rotor slots 404 - the magnets above are not shown. The rotor hub has a shaft 405 that is connected to it. The shaft is connected to a rotor bearing structure 406. A section of the fibre optic cable 407 is embedded within the core of the shaft. Connected to the drive shaft is an outcoupling collar 408. The outcoupling collar may have one or more lenses that are coupled to the fibre optic cable that passes through the shaft of the rotor. The presence of the collar allows for light to be transmitted from a shaft, that doesn't require an open end, so can be used on the drive shaft side of the shaft. The collar is associated with a lens or lenses for receiving the light from the fibre optical sensing in the electrical machine. The light from the outcoupling collar lens is input into a stationary optical collection set-up 409, comprising at least a second lens. The second lens is coupled to fibre optic cable which is used to transmit the light to the interrogator 410. In this case, the lens system can be any suitable lens system that is able to transfer light between the optical fibres so that a signal can be transferred. Non-imaging optics are desirable in as they require less precise alignment that can be disturbed during operation.

Figure 5 presents an end cross-sectional image of the outcoupling collar as presented in figure 4. In the example of figure 4 the housing around the electrical machine is not shown. The outcoupling collar 501 is shown around the outer periphery of the rotor shaft 502. The rotor shaft is shown having a hollow core 503 that allows for the optical fibre 504 to pass through. In the example shown, there are three optical fibres present within the system. Each optical fibre is coupled to a lens 505 mounted to the outcoupling collar. The outcoupling collar is shown connected to the shaft via the use of grub screws 506. However, as the skilled person would appreciate there are a number of permanent (welding, brazing, soldering etc.,) or non-permanent (bolts, fasteners, structured surface features, etc.,) that may be used to couple the outcoupling collar to the shaft. The outcoupling collar may, as shown, be provided with a collar balancing features 507 within the outcoupling collar structure. The outcoupling collar may, as shown, be provided with weighted washers 508, to assist with balancing. Adjacent to the outcoupling collar is a stationary optical collection set up 509 comprising at least a further lens that is coupled to a fibre optic cable 510 that transmits light to the interrogator 511.

In the examples presented in figures 2-4 the interrogator is both emitter and receiver of the light. However, the interrogator may be just a receiver with an alternative light source used. The interrogator may operate in the infra-red. For example, the interrogator may have a wavelength of between 1500 nanometres to 1600 nanometres. If the interrogator is both a transmitter and receiver device, the power output of the reflected light may be monitored, as well as the spectra. The fibre optic cables may be used to monitor the temperature or the strain within an electrical machine. The advantage over the use of electrical sensors is that fibre optics require less shielding and as such can be used in environments that are prone to electrical noise. The fibre optic cables may feature Bragg grating, Long Period Grating (LPG) technologies or Distributed Fibre Optic Sensor structure. The fibre optic cable may have a plastic or nylon cladding. The presence of the cladding protects the fibre optic cable from damage.

Although discussed in relation to a use in operation with a gas turbine engine the disclosure could be used to monitor any suitable electrical machine, such as generators or motors. These machines may be coupled to other drive systems such as in vehicles or may be in a stationary power situation.

Various examples have been described, each of which feature various combinations of features. It will be appreciated by those skilled in the art that, except where clearly mutually exclusive, any of the features may be employed separately or in combination with any other features and the disclosure extends to and includes all combinations and sub-combinations of one or more features described herein.

## Claims

1. An electrical machine having a monitoring apparatus the monitoring apparatus comprising
at least one first fibre optic cable having a periodic structure within, at least, a section of the first fibre optic cable, the first fibre optic cable being coupled to an outcoupling optical set up comprising at least one first lens, and
an interrogator connected to a second fibre optic cable and at least one second lens,
the light transmitted through the first fibre optic cable is manipulated by the first lens and transmitted to the second lens which is coupled to the second fibre optical cable which transfers a light signal to the interrogator, and wherein a portion of the first fibre optical cable is connected to a component within the electrical machine.

2. The electrical machine according to claim 1, wherein the electrical machine is a motor or generator and wherein a portion of the first fibre optic cable is connected to the rotor of the generator or motor.

3. The electrical machine according to claim 2, wherein a portion of the first fibre optic cable surrounds at least a section of the rotor and the first fibre optic cable is passed through the rotor shaft.

4. The electrical machine according to any preceding claim, wherein the at least first lens is a collimating or non-imaging lens coupled to the end of a non-drive shaft of the electrical machine and the optical axis is centred about a rotational axis of the electrical machine, the at least one first lens being mounted to a lens mount that is connected to the shaft.

5. The electrical machine according to claim 4, wherein an optical axis of the at least one second lens is positioned and centred on the rotational axis of the electrical machine.

6. The electrical machine according to claim 4 or claim 5, wherein the lens mount also comprises balancing features for the shaft.

7. The electrical machine according to claims 1-3, wherein the at least first lens is connected to an outcoupling collar, wherein the outcoupling collar is coupled to the outside of a component of the electrical machine, with the at least one first lens being connected to an outer periphery of the outcoupling collar, and wherein the at least first lens is not aligned with a rotational axis of the electrical machine.

8. The electrical machine according to claim 7, wherein the at least one first lens has an optical axis that is perpendicular to the rotational axis of the electric machine and the at least one second lens is arranged at a distance from the at least one first lens and arranged so that its optical axis is centred perpendicular to the rotational axis of the electric motor.

9. The electrical machine according to claim 7 or claim 8, wherein more than one first optical fibre are present and each first optical fibre having an associated first lens connected to the outcoupling collar.

10. The electrical machine of any preceding claim, wherein the at least one first fibre optic cable and/or the second fibre optic cable are clad with a plastic or nylon material.

11. The electrical machine according to any preceding claim wherein the interrogator is an emitter and receiver interrogator, which produces and detects the light.

12. The electrical machine according to any preceding claim wherein the first fibre optic cable features at least a section of a Bragg grating, Long Period Grating (LPG) technologies or Distributed Fibre Optic Sensor structure.

13. The electrical machine according to any preceding claim, wherein the at least one first and at least one second lens form a collimating lens arrangement or a non-imaging lens arrangement.

14. A gas turbine engine for an aircraft comprising:
an engine core comprising a turbine, a compressor, and a core shaft connecting the turbine to the compressor; a fan located upstream of the engine core, the fan comprising a plurality of fan blades; and a gearbox that receives an input from the core shaft (26) and outputs drive to the fan so as to drive the fan at a lower rotational speed than the core shaft, wherein the gas turbine engine incorporates an electrical machine according to any preceding claim.

15. The gas turbine engine according to 14, wherein:
the turbine is a first turbine, the compressor is a first compressor, and the core shaft is a first core shaft;
the engine core further comprises a second turbine, a second compressor, and a second core shaft connecting the second turbine to the second compressor; and the second turbine, second compressor, and second core shaft are arranged to rotate at a higher rotational speed than the first core shaft.
